# EUROPEAN PATENT SPECIFICATION

(11) **EP 2 233 807 B1**
(45) Date of publication and mention of the grant of the patent: **15.02.2012**
(21) Application number: 09155918.7
(22) Date of filing: 23.03.2009
(51) Int. Cl.: F16K 31/08, F16K 15/02

(54) **Check valve and pump with the same**
Rückschlagventil und Pumpe damit
Clapet de retenue et pompe associée

(43) Date of publication of application: 29.09.2010
(73) Proprietor: Walrus Pump Co., Ltd., Taipei Hsien (TW)
(72) Inventor: Huang, Shou-Hsiung, Taipei Hsien (TW)
(74) Representative: Guy, Elizabeth

(56) References cited:
- JP-A- 2003 156 175
- US-A1- 2003 037 822
- US-A1- 2009 041 592

## Description

### Field of the Invention

The present invention relates to a check valve, and more particularly to a check valve that is reliable and has an extended operational life span.

### Background of the Invention

Generally speaking, when water is transported to a specific location via a water pipe, the water pipe has a pump to provide motive power to pump water, so water can be transported promptly and conveniently to the specific location. A conventional pump is made of plastic and has a chamber, an inlet, an outlet and an impeller. The inlet communicates with the chamber. The outlet also communicates with the chamber. The impeller is mounted rotatably in the chamber, connects to a motor or a turbine and is driven to rotate thereby. When the pump is working, the impeller pumps water to flow from the inlet to the outlet. When the pump is not working, water may flow back from the outlet to the chamber, so the impeller or other element in the pump may be damaged.

US 2009/041592 and JP 2003 156175 respectively disclose a pump with a valve. The valve has a spring or bellows between an adjustment bracket and an upper disk to prevent the impeller or other element in the pump from being damaged. However, if a large volume of water flows back rapidly towards the valve, the spring or bellows within the valve may surpass its elasticity limit and thus can easily result in elastic fatigue. Therefore, the valve in each of these disclosed documents has a potentially short lifespan.

The primary objective of the present invention is to provide a check valve that is reliable and has an extended operational life span.

### Summary of the Invention

In accordance with the present invention, there is provided a check valve. The check valve comprises a guiding bracket having a base. The base has a central hole that is defined centrally through the base. The check valve further comprises a spindle having a rod which protrudes slidably in the central hole of the guiding bracket and has a lower end. A stuffing nut is formed on the lower end of the rod and has at least one magnet. The resilient element is mounted around the rod of the spindle and is mounted between the guiding bracket and the stuffing nut. An annular cushion is mounted around the rod of the spindle and on the stuffing nut and mounted between the stuffing nut and the guiding bracket.

When the pump is working, an impeller pumps water to flow from the inlet to the outlet. When the pump is not working, the check valve prevents backflow of water from the outlet to the chamber, so the impeller or other element in the pump will not be damaged. Furthermore, the annular cushion prevents the resilient element from surpassing its elasticity limit and thereby prevents elastic fatigue.

### IN THE DRAWINGS:

Fig. 1 is a perspective view of a pump with a check valve in accordance with the present invention shown close;
Fig. 2 is an exploded perspective view of the check valve of the pump in Fig. 1;
Fig. 3 is a perspective view of a guiding bracket of the check valve in Fig. 2;
Fig. 4 is another perspective view of the guiding bracket of the check valve in Fig. 2;
Fig. 5 is a cross sectional side view of the guiding bracket of the check valve in Fig. 3;
Fig. 6 is a cross sectional side view of a liner of the check valve in Fig. 2; and
Fig. 7 is a perspective view of the pump with a check valve in Fig. 1 shown open.

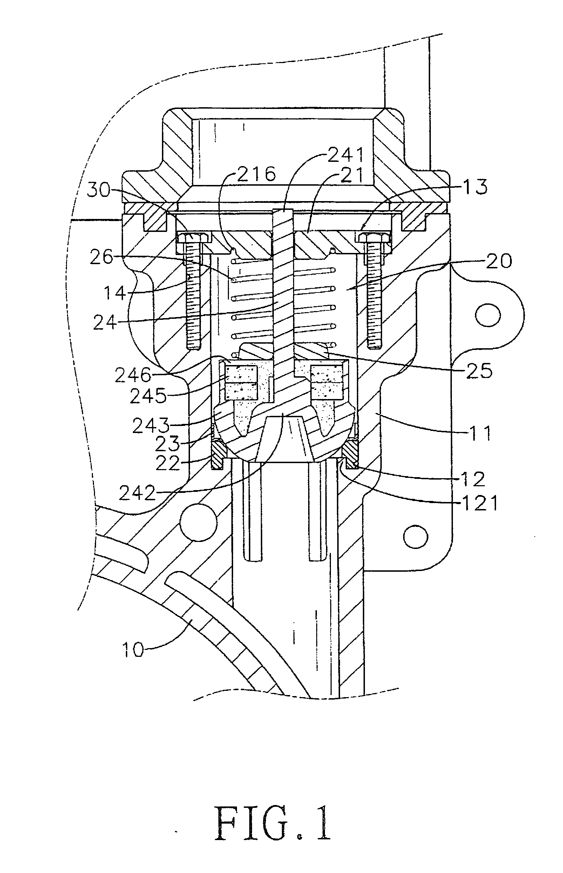

With reference to Fig. 1, a pump in accordance with the present invention has a body (10), an outlet (11) and a check valve (20).

The body (10) has a magnetic switch.

The outlet (11) is formed on the body (10) and has a through hole, an inner surface, an input (12), an output (13) and multiple fastening threaded holes (14). The through hole is defined axially through the outlet (11). The input (12) communicates with the through hole and has an annular boss (121) formed on the inner surface and protruding axially in through hole. The output (13) communicates with the through hole and may be opposite to the input (12). The fastening threaded holes (14) are defined axially in the outlet (11) near the output (13).

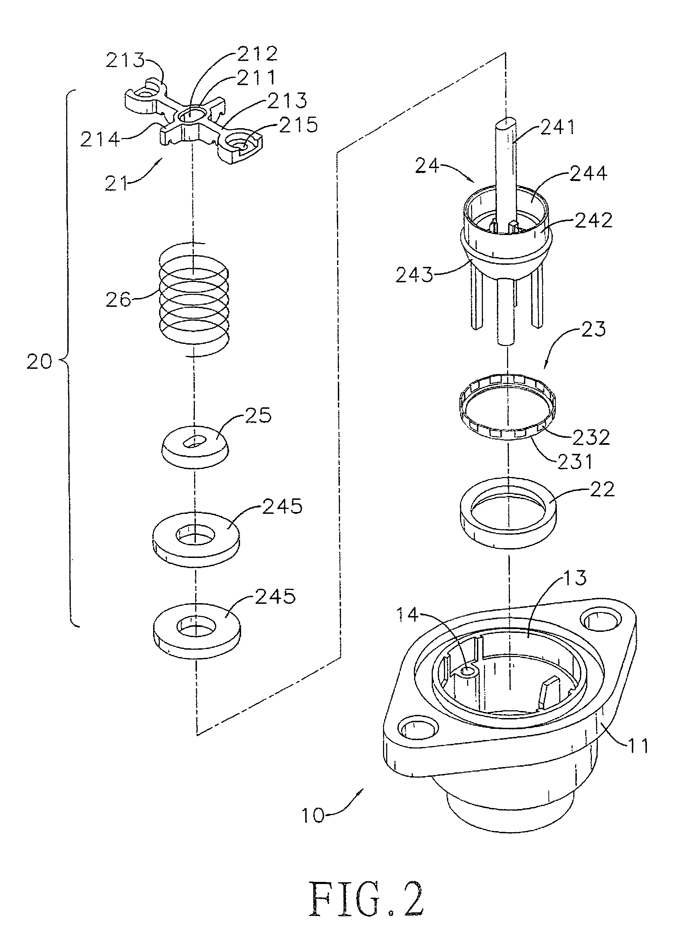

With further reference to Fig 2, the check valve (20) is mounted in the outlet (11) and has a guiding bracket (21), a gasket (22), a liner (23), a spindle (24), an annular cushion (25) and a resilient element (26).

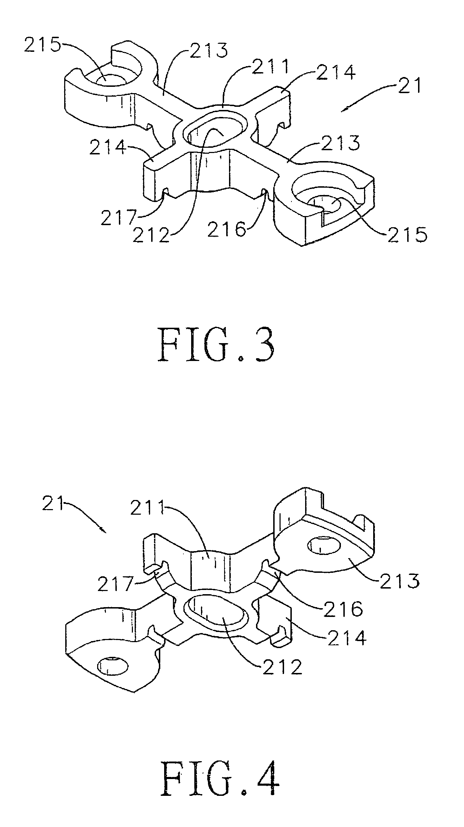

With further reference to Figs. 3 to 5, the guiding bracket (21) may be cross-shaped and has a base (211), at least two fastening protrusions (213), two assistant fastening protrusions (214) and multiple intervals. The base (211) has a central hole (212). The central hole (212) is defined centrally through the base (211). In this embodiment, the guiding bracket (21) has two fastening protrusions (213). The fastening protrusions (213) protrude oppositely from the base (211) and each fastening protrusion (213) has a fastening hole (215), an upper surface and a lower surface. The fastening hole (215) is defined through the fastening protrusion (213) and allows a threaded rod (30) to extend into the fastening hole (215) and screw into one fastening threaded hole (14) of the outlet (11), so the guiding bracket (21) is fastened to the outlet (11) near the output (13). The lower surface of each fastening protrusion (213) has an engaging recess (216) defined therein. The assistant fastening protrusions (214) protrude oppositely from the base (211) and are located between the fastening protrusions (213), so the guiding bracket (21) presents a cross shape. Each assistant fastening protrusion (214) has an upper surface and a lower surface. The lower surface of each assistant fastening protrusion (214) has an assistant engaging recess (217). The assistant engaging recesses (217) are respectively formed in the lower surfaces of the assistant fastening protrusions (214) and correspond to the engaging recesses (216) of the fastening protrusions (213), so the assistant engaging recesses (217) and the engaging recesses (216) have a same radius with and are concentric to a center of the central hole (212). The intervals are formed alternately between the fastening protrusions (213) and the assistant fastening protrusions (214) and allow water to flow out of the outlet (11) via the intervals. More precisely, each interval is located between each fastening protrusion (213) and each assistant fastening protrusion (214).

The gasket (22) may be rubber and has an L-shaped radial cross section and is mounted on the annular boss (121) of the input (12) of the outlet (11).

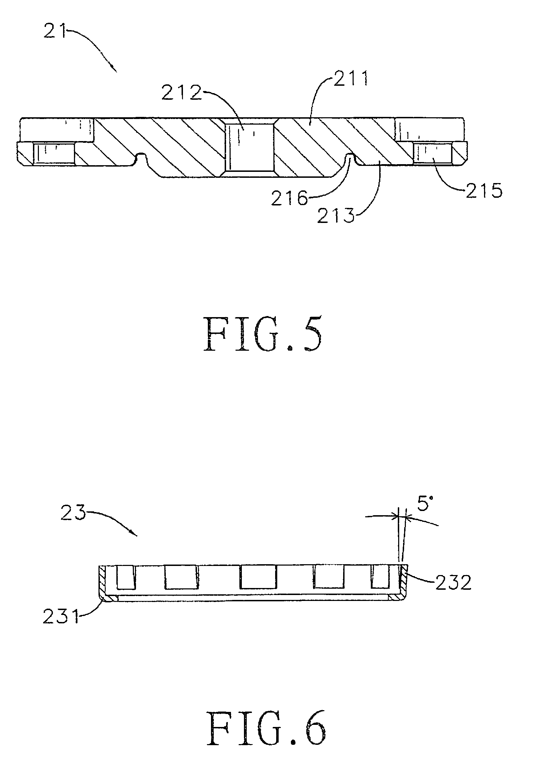

With further reference to Fig. 6, the liner (23) is mounted on and abuts the gasket (22) and has an annular base (231) and multiple resilient sheets (232). The annular base (231) is mounted on and abuts the gasket (22). The resilient sheets (232) protrude upward from the annular base (231) and slant about 5° toward and abut the inner surface of the outlet (11) to create friction between the resilient sheets (232) and the inner surface of the outlet (11), so the gasket (22) can be positioned between the liner (23) and the annular boss (121) of the input (12) of the outlet (11).

The spindle (24) is mounted in the outlet (11) and has a rod (241) and a stuffing nut (242). The rod (241) protrudes slidably in the central hole (212) of the guiding bracket (21) and has an upper end and a lower end. The stuffing nut (242) is formed on the lower end of the rod (241), is tapered downward to present a bullet shape and has a top, a bottom, an outer surface, a protruding portion (243), a recess (244) and at least one magnet (245). The protruding portion (243) protrudes from the outer surface near the bottom of the stuffing nut (242) and has a domical surface. The domical surface contacts with the gasket (22) to seal the input (12) of the outlet (11) when the pump does not work. The recess (244) is defined in the top of the stuffing nut (242). The magnet (245) is annular, is mounted in the recess (244) and corresponds to the magnetic switch in the body (10) of the pump. In this embodiment, the stuffing nut (242) has two magnets (245). The recess (244) is filled with glue after the magnet (245) is mounted in the recess (244) to form a glue layer (246) to encapsulate the magnet (245). The glue layer (246) has an upper surface that is flush with and not higher than the top of the stuffing nut (242).

The annular cushion (25) is mounted around the rod (241) of the spindle (24) and on the top of the stuffing nut (242) and may be mounted on the upper surface of the glue layer (246). The annular cushion (25) is mounted between the guiding bracket (21) and the stuffing nut (242) when the stuffing nut (242) is pushed upward by water flow.

The resilient element (26) may be a compression spring, is mounted around the rod (241) of the spindle (24) and has an upper end and a lower end. The upper end of the resilient element (26) abuts the guiding bracket (21) and is mounted in the fastening protrusions (213) and the assistant fastening protrusions (214). The lower end of the resilient element (26) is disposed around the annular cushion (25) and abuts the stuffing nut (242) and may abut the upper surface of the glue layer (246).

When the pump is working, an impeller pumps water to flow from the inlet to the outlet (11). When the pump is not working, the check valve (20) prevents backflow of water from the outlet (11), so the impeller or other element in the pump will not be damaged.

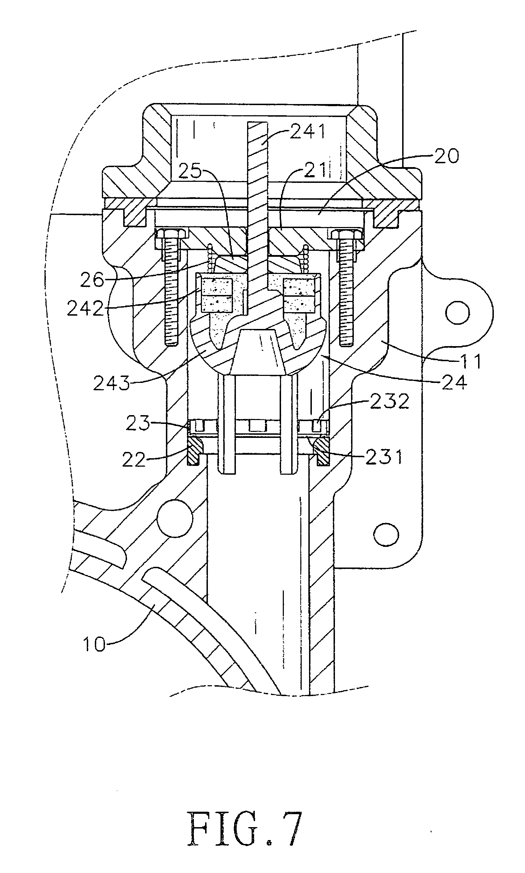

With reference to Figs. 1 and 7, in this preferred embodiment, when the pump is working, water impacts the stuffing nut (242) of the spindle (24) and the resilient element (26) is compressed. In the present invention, the annular cushion (25) mounted between the guiding bracket (21) and the stuffing nut (242) prevents the resilient element (26) from surpassing its elasticity limit and resulting in elastic fatigue. Therefore, the check valve (20) of the present invention has an increased operational life span.

## Claims

1. A check valve (20) comprising:
a guiding bracket (21) having a base (211) having a central hole (212) being defined centrally through the base (211);
a spindle (24) having
a rod (241) protruding slidably in the central hole (212) of the guiding bracket (21) and having a lower end; and
a stuffing nut (242) being formed on the lower end of the rod (241) and having at least one magnet (245);
a gasket (22) contacting with the stuffing nut (242);
a resilient element (26) being mounted around the rod (241) of the spindle (24) and between the guiding bracket (21) and the stuffing nut (242); and
an annular cushion (25) being mounted around the rod (241) of the spindle (24) and on the stuffing nut (242) and mounted between the stuffing nut (242) and the guiding bracket (21).

2. The check valve (20) as claimed in claim 1, further having:
a liner (23) being mounted on and abutting the gasket (22) and having:
an annular base (231) being mounted on and abutting the gasket 20 (22); and
multiple resilient sheets (232) protruding upward from the annular base (231) to position the gasket, wherein
the guiding bracket (21) further has at least two fastening protrusions (213) protruding from the base (211) and each fastening protrusion (213) has a lower surface with an engaging recess (216);
the stuffing nut (242) of the spindle (24) is tapered downward to present a bullet shape and has
a top;
a domical surface selectively contacting with the gasket (22);
a recess (244) being defined in the top of the stuffing nut (242); and
the at least one magnet (245) being mounted in the recess (244); and
the resilient element (26) has an upper end abutting the guiding bracket (21) and is mounted in the fastening protrusions (213).

3. The check valve (20) as claimed in claim 2, wherein the guiding bracket (21) has
two fastening protrusions (213) protruding oppositely from the base (211) and each fastening protrusion (213) having a fastening hole (215) being defined through the fastening protrusions (213); and
two assistant fastening protrusions (214) protruding oppositely from the base (211), being located between the fastening protrusions (213) to form multiple intervals, allowing the guiding bracket (21) to present a cross shape and each assistant fastening protrusions (214) having a lower surface with an assistant engaging recess (217) to receive the upper end of the resilient element (26); and
the assistant engaging recesses (217) and the engaging recesses (216) having a same radius with and being concentric to a center of the central hole (212).

4. The check valve (20) as claimed in claim 2, wherein
the stuffing nut (242) further has
a bottom;
an outer surface;
a protruding portion (243) protruding from the outer surface near the bottom of the stuffing nut (242), wherein the domical surface is formed on the protruding portion (243); and
the resilient element (26) further has a lower end being around the annular cushion (25) and abutting the stuffing nut (242).

5. The check valve (20) as claimed in claim 3, wherein
the stuffing nut (242) further has
a bottom;
an outer surface;
a protruding portion (243) protruding from the outer surface near the bottom of the stuffing nut (242), wherein the domical surface is formed on the protruding portion (243); and
the resilient element (26) further has a lower end being around the annular cushion (25) and abutting the stuffing nut (242).

6. The check valve (20) as claimed in anyone of the claims 2 to 5, wherein
the recess (244) is filled with glue to form a glue layer (246) encapsulating the magnet (245) and the glue layer (246) has an upper surface; and
the resilient element (26) further has a lower end being around the annular cushion (25) and abutting the upper surface of the glue layer (246) of the stuffing nut (242).

7. The check valve (20) as claimed in claim 6, wherein the upper surface of the glue layer (246) is flush with the top of the stuffing nut (242).

8. A pump comprising
a body (10) having a magnetic switch;
an outlet (11) formed on the body (10) and having
an inner surface;
an input (12) having an annular boss (121); and
an output (13); wherein the pump further comprises:
a check valve (20) being mounted in the outlet (11) of the pump and having
a guiding bracket (21) being fastened to the output (13) of the outlet (11) and having a base (211) having a central hole (212) being defined centrally through the base (211); and
a gasket (22) being mounted on the annular boss (121) of the input (12) of the outlet (11);
a spindle (24) being mounted in the outlet (11) and having
a rod (241) protruding slidably in the central hole (212) of the guiding bracket (21) and having a lower end; and
a stuffing nut (242) being formed on the lower end of the rod (241) and having at least one magnet (245);
a resilient element (26) being mounted around the rod (241) of the spindle (24) and between the guiding bracket (21) and the stuffing nut (242); and
an annular cushion (25) being mounted around the rod (241) of the spindle (24) and on the stuffing nut (242).

9. The pump as claimed in claim 8, further having a liner (23) being mounted on and abutting the gasket (22) and having
an annular base (231) being mounted on and abutting the gasket (22); and
multiple resilient sheets (232) protruding upward from the annular base (231) and slanting toward and abutting the inner surface of the outlet (11) to position the gasket (22) between the liner (23) and the annular boss (121) of the input (12) of the outlet (11); and wherein
the guiding bracket (21) further has at least two fastening protrusions (213) protruding from the base (211) and each fastening protrusion (213) has a lower surface with an engaging recess (216);
the stuffing nut (242) of the spindle (24) is tapered downward to present a bullet shape and has
a top;
a domical surface selectively contacting with the gasket (22);
a recess (244) being defined in the top of the stuffing nut (242); and
the at least one magnet (245) being mounted in the recess (244); and
the resilient element (26) has an upper end abutting the guiding bracket (21) and is mounted in the fastening protrusions (213).

10. The pump as claimed in claim 9, wherein the guiding bracket (21) having
two fastening protrusions (213) protruding oppositely from the base (211) and each fastening protrusion (213) having a fastening hole (215) being defined through the fastening protrusions (213); and
two assistant fastening protrusions (214) protruding oppositely from the base (211), being respectively mounted between the fastening protrusions (213) to form multiple intervals, allowing the guiding bracket (21) to present a cross shape and each assistant fastening protrusions (214) having a lower surface with an assistant engaging recess (217) to receive the upper end of the resilient element (26); and
the assistant engaging recesses (217) and the engaging recesses (216) having a same radius with and being formed concentric to a center of the central hole (212).

11. The pump as claimed in claim 9, wherein
the stuffing nut (242) further has
a bottom;
an outer surface;
a protruding portion (243) protruding from the outer surface near the bottom of the stuffing nut (242), wherein the domical surface is formed on the protruding portion (243); and
the resilient element (26) further has a lower end being around the annular cushion (25) and abutting the stuffing nut (242).

12. The pump as claimed in claim 10, wherein
the stuffing nut (242) further has
a bottom;
an outer surface;
a protruding portion (243) protruding from the outer surface near the bottom of the stuffing nut (242), wherein the domical surface is formed on the protruding portion (243); and
the resilient element (26) further has a lower end being around the annular cushion (25) and abutting the stuffing nut (242).

13. The pump as claimed in anyone of the claims 9 to 12, wherein
the recess (244) is filled with glue to form a glue layer (246) encapsulating the magnet (245) and the glue layer (246) has an upper surface; and
the resilient element (26) further has a lower end being around the annular cushion (25) and abutting the upper surface of the glue layer (246) of the stuffing nut (242).

14. The pump as claimed in claim 13, wherein the upper surface of the glue layer (246) is flush with the top of the stuffing nut (242).

## Patentansprüche

1. Rückschlagventil (20), aufweisend:
einen Führungshalter (21), welcher eine Basis (211) mit einem zentralen Loch (212) aufweist, welches zentral durch die Basis (211) festgelegt ist;
eine Spindel (24), welche
einen Stab (241), der verschiebbar in das zentrale Loch (212) des Führungshalters (21) hineinragt und ein unteres Ende aufweist; und
eine Stopfmutter (242) aufweist, welche auf dem unteren Ende des Stabs (241) ausgebildet ist und wenigstens einen Magnet (245) aufweist;
eine Dichtung (22), welche mit der Stopfmutter (242) kontaktiert;
ein Vorspannelement (26), welches um den Stab (241) der Spindel (24) herum und zwischen dem Führungshalter (21) und der Stopfmutter (242) angebracht ist; und
einen ringförmigen Dämpfer (25), welcher um den Stab (241) der Spindel (24) herum und auf der Stopfmutter (242) angebracht ist und zwischen der Stopfmutter (242) und dem Führungshalter (21) angebracht ist.

2. Rückschlagventil (20) nach Anspruch 1, ferner aufweisend:
eine Buchse (23), welche auf und angrenzend an die Dichtung (22) angebracht ist und welche aufweist:
eine ringförmige Basis (231), welche auf und angrenzend an die Dichtung (22) angebracht ist; und
mehrere Spannblätter (232), welche aufwärts von der ringförmigen Basis (231) weg ragen, um die Dichtung zu positionieren, wobei
der Führungshalter (21) ferner wenigstens zwei Befestigungsvorsprünge (213) aufweist, welche von der Basis (211) weg ragen und wobei jeder Befestigungsvorsprung (213) eine untere Oberfläche mit einer Einsatzausnehmung (216) aufweist; wobei
die Stopfmutter (242) der Spindel (24) nach unten hin verjüngt ist, um eine Kugelform zu bieten und
ein Kopfteil;
eine domförmige Oberfläche, welche selektiv mit der Dichtung (22) kontaktiert;
eine Ausnehmung (244), welche in dem Kopfteil der Stopfmutter (242) festgelegt ist; und
den wenigstens einen Magnet (245) aufweist, welcher in der Ausnehmung (244) angebracht ist; und wobei
das Vorspannelement (26) ein oberes Ende aufweist, welches an den Führungshalter (21) angrenzt und in den Befestigungsvorsprüngen (213) angebracht ist.

3. Rückschlagventil (20) nach Anspruch 2, wobei der Führungshalter (21) aufweist
zwei Befestigungsvorsprünge (213), welche gegenüberliegend von der Basis (211) weg ragen und wobei jeder Befestigungsvorsprung (213) ein Befestigungsloch (215) aufweist, welches durch die Befestigungsvorsprünge (213) festgelegt ist; und
zwei Hilfsbefestigungsvorsprünge (214), welche gegenüberliegend von der Basis (211) weg ragen, und welche zwischen den Befestigungsvorsprüngen (213) angeordnet sind, um mehrere Zwischenräume zu bilden, welche dem Führungshalter (21) erlauben eine Kreuzform zu bieten und wobei jeder Hilfsbefestigungsvorsprung (214) eine untere Oberfläche mit einer Hilfseinsatzausnehmung (217) aufweist, um das obere Ende des Vorspannelements (26) aufzunehmen; und wobei
die Hilfseinsatzausnehmungen (217) und die Einsatzausnehmungen (216) einen gleichen Radius mit und konzentrisch zu einem Zentrum des zentralen Lochs (212) aufweisen.

4. Rückschlagventil (20) nach Anspruch 2, wobei
die Stopfmutter (242) ferner aufweist
ein Unterteil;
eine äußere Oberfläche;
einen auskragenden Abschnitt (243), welcher von der äußeren Oberfläche nahe dem Unterteil der Stopfmutter (242) weg ragt, wobei die domförmige Oberfläche auf dem auskragenden Abschnitt (243) ausgebildet ist; und
wobei das Vorspannelement (26) ferner ein unteres Ende aufweist, welches um den ringförmigen Dämpfer (25) herum und angrenzend an die Stopfmutter (242) angeordnet ist.

5. Rückschlagventil (20) nach Anspruch 3, wobei
die Stopfmutter (242) ferner aufweist
ein Unterteil;
eine äußere Oberfläche;
einen auskragenden Abschnitt (243), welcher von der äußeren Oberfläche nahe dem Unterteil der Stopfmutter (242) weg ragt, wobei die domförmige Oberfläche auf dem auskragenden Abschnitt (243) ausgebildet ist; und
wobei das Vorspannelement (26) ferner ein unteres Ende aufweist, welches um den ringförmigen Dämpfer (25) herum und angrenzend an die Stopfmutter (242) angeordnet ist.

6. Rückschlagventil (20) nach irgendeinem der Ansprüche 2 bis 5, wobei
die Ausnehmung (244) mit Kleber gefüllt ist, um eine den Magnet (245) einschließende Kleberlage (246) zu bilden und wobei die Kleberlage (246) eine obere Oberfläche aufweist; und
das Vorspannelement (26) ferner ein unteres Ende aufweist, welches um den ringförmigen Dämpfer (25) herum und angrenzend an die obere Oberfläche der Kleberlage (246) der Stopfmutter (242) angeordnet ist.

7. Rückschlagventil (20) nach Anspruch 6, wobei die obere Oberfläche der Kleberlage (246) bündig mit dem Kopfteil der Stopfmutter (242) ist.

8. Pumpe, aufweisend
einen Körper (10), der einen magnetischen Schalter aufweist;
einen Auslass (11), der an dem Körper (10) ausgebildet ist und
eine innere Oberfläche;
einen Eingang (12), der einen ringförmigen Absatz (121) hat; und
einen Ausgang (13) aufweist; wobei die Pumpe ferner aufweist:
ein Rückschlagventil (20), welches in dem Auslass (11) der Pumpe angebracht ist und aufweist
einen Führungshalter (21), der an dem Ausgang (13) des Auslasses (11) befestigt ist und eine Basis (211) mit einem zentralen Loch (212) aufweist, welches zentral durch die Basis (211) festgelegt ist; und
eine Dichtung (22), welche auf dem ringförmigen Absatz (121) des Eingangs (12) des Auslasses (11) angebracht ist;
eine Spindel (24), welche in dem Auslass (11) angebracht ist und
einen Stab (241), der verschiebbar in das zentrale Loch (212) des Führungshalters (21) hineinragt und ein unteres Ende aufweist; und
eine Stopfmutter (242) aufweist, welche auf dem unteren Ende des Stabs (241) ausgebildet ist und wenigstens einen Magneten (245) aufweist;
ein Vorspannelement (26), welches um den Stab (241) der Spindel (24) herum und zwischen dem Führungshalter (21) und der Stopfmutter (242) angebracht ist; und
einen ringförmigen Dämpfer (25), welcher um den Stab (241) der Spindel (24) herum und auf der Stopfmutter (242) angebracht ist.

9. Pumpe nach Anspruch 8, ferner aufweisend
eine Buchse (23), welche auf und angrenzend an die Dichtung (22) angebracht ist und welche aufweist:
eine ringförmige Basis (231), welche auf und angrenzend an die Dichtung (22) angebracht ist; und
mehrere Spannblätter (232), welche aufwärts von der ringförmigen Basis (231) weg ragen und sich in Richtung und angrenzend an die innere Oberfläche des Auslasses (11) neigen, um die Dichtung (22) zwischen der Buchse (23) und dem ringförmigen Absatz (121) des Eingangs (12) des Auslasses (11) zu positionieren; und wobei
der Führungshalter (21) ferner wenigstens zwei Befestigungsvorsprünge (213) aufweist, welche von der Basis (211) weg ragen und wobei jeder Befestigungsvorsprung (213) eine untere Oberfläche mit einer Einsatzausnehmung (216) aufweist;
wobei die Stopfmutter (242) der Spindel (24) nach unten hin verjüngt ist, um eine Kugelform zu bieten und
ein Kopfteil;
eine domförmige Oberfläche, welche selektiv mit der Dichtung (22) kontaktiert;
eine Ausnehmung (244), welche in dem Kopfteil der Stopfmutter (242) festgelegt ist; und
den wenigstens einen Magnet (245) aufweist, welcher in der Ausnehmung (244) angebracht ist; und wobei
das Vorspannelement (26) ein oberes Ende aufweist, welches an den Führungshalter (21) angrenzt und in den Befestigungsvorsprüngen (213) angebracht ist.

10. Pumpe nach Anspruch 9, wobei der Führungshalter (21) aufweist
zwei Befestigungsvorsprünge (213), welche gegenüberliegend von der Basis (211) weg ragen und wobei jeder Befestigungsvorsprung (213) ein Befestigungsloch (215) aufweist, welches durch die Befestigungsvorsprünge (213) festgelegt ist; und
zwei Hilfsbefestigungsvorsprünge (214), welche gegenüberliegend von der Basis (211) weg ragen, und welche jeweils zwischen den Befestigungsvorsprüngen (213) angebracht sind, um mehrere Zwischenräume zu bilden, welche es dem Führungshalter (21) erlauben eine Kreuzform zu bieten und wobei jeder Hilfsbefestigungsvorsprung (214) eine untere Oberfläche mit einer Hilfseinsatzausnehmung (217) aufweist, um das obere Ende des Vorspannelements (26) aufzunehmen; und wobei
die Hilfseinsatzausnehmungen (217) und die Einsatzausnehmungen (216) einen gleichen Radius mit und konzentrisch zu einem Zentrum des zentralen Lochs (212) aufweisen.

11. Pumpe nach Anspruch 9, wobei
die Stopfmutter (242) ferner aufweist
ein Unterteil;
eine äußere Oberfläche;
einen auskragenden Abschnitt (243), welcher von der äußeren Oberfläche nahe dem Unterteil der Stopfmutter (242) weg ragt, wobei die domförmige Oberfläche auf dem auskragenden Abschnitt (243) ausgebildet ist; und
wobei das Vorspannelement (26) ferner ein unteres Ende aufweist, welches um den ringförmigen Dämpfer (25) herum und angrenzend an die Stopfmutter (242) angeordnet ist.

12. Pumpe nach Anspruch 10, wobei
die Stopfmutter (242) ferner aufweist
ein Unterteil;
eine äußere Oberfläche;
einen auskragenden Abschnitt (243), welcher von der äußeren Oberfläche nahe dem Unterteil der Stopfmutter (242) weg ragt, wobei die domförmige Oberfläche auf dem auskragenden Abschnitt (243) ausgebildet ist; und
wobei das Vorspannelement (26) ferner ein unteres Ende aufweist, welches um den ringförmigen Dämpfer (25) herum und angrenzend an die Stopfmutter (242) angeordnet ist.

13. Pumpe nach irgendeinem der Ansprüche 9 bis 12, wobei
die Ausnehmung (244) mit Kleber gefüllt ist, um eine den Magnet (245) einschließende Kleberlage (246) zu bilden und wobei die Kleberlage (246) eine obere Oberfläche aufweist; und
das Vorspannelement (26) ferner ein unteres Ende aufweist, welches um den ringförmigen Dämpfer (25) herum und angrenzend an die obere Oberfläche der Kleberlage (246) der Stopfmutter (242) angeordnet ist.

14. Pumpe nach Anspruch 13, wobei die obere Oberfläche der Kleberlage (246) bündig mit dem Kopfteil der Stopfmutter (242) ist.

## Revendications

1. Clapet anti-retour (20) comprenant :
un support de guidage (21) possédant une base (211) possédant un trou central (212) défini de façon centrale à travers la base (211) ;
un tourillon (24) possédant
- une tige (241) faisant saillie avec faculté de glissement dans le trou central (212) du support de guidage (21) et possédant une extrémité inférieure ; et
- un écrou de presse-garniture (242) formé sur l'extrémité inférieure de la tige (241) et comprenant au moins un aimant (245) ;
un joint d'étanchéité (22) en contact avec l'écrou de presse-garniture (242) ;
un élément élastique (26) monté autour de la tige (241) du tourillon (24) et entre le support de guidage (21) et l'écrou de presse-garniture (242) ; et
un coussinet de butée annulaire (25) monté autour de la tige (241) du tourillon (24) et sur l'écrou de presse-garniture (242) et monté entre l'écrou de presse-garniture (242) et le support de guidage (21).

2. Clapet anti-retour (20) selon la revendication 1, possédant en outre :
une chemise (23) montée sur et venant en butée contre le joint d'étanchéité (22) et possédant :
- une base annulaire (231) montée sur et venant en butée contre le joint d'étanchéité (22) ; et
de multiples feuilles élastiques (232) faisant saillie vers le haut depuis la base annulaire (231) afin de positionner le joint d'étanchéité, dans lequel
le support de guidage (21) possède en outre au moins deux protubérances de fixation (213) faisant saillie depuis la base (211) et chaque protubérance de fixation (213) possède une surface inférieure avec un évidement de prise (216) ;
l'écrou de presse-garniture (242) du tourillon (24) est effilé vers le bas afin de présenter une forme d'ogive et possède
- un sommet ;
- une surface en dôme sélectivement en contact avec le joint d'étanchéité (22) ;
- un évidement (244) défini dans le sommet de l'écrou de presse-garniture (242) ; et
- le au moins un aimant (245) étant monté dans l'évidement (244) ; et
l'élément élastique (26) possède une extrémité supérieure venant en butée contre le support de guidage (21) et est monté dans les protubérances de fixation (213).

3. Clapet anti-retour (20) selon la revendication 2, dans lequel le support de guidage (21) possède
deux protubérances de fixation (213) faisant saillie de façon opposée depuis la base (211) et chaque protubérance de fixation (213) possédant un trou de fixation (215) défini à travers les protubérances de fixation (213) ; et
deux protubérances de fixation auxiliaires (214) faisant saillie de façon opposée depuis la base (211), situées entre les protubérances de fixation (213) afin de former des intervalles multiples, permettant au support de guidage (21) de présenter une forme en croix et chaque protubérance de fixation auxiliaire (214) possédant une surface inférieure avec un évidement de prise auxiliaire (217) afin de recevoir l'extrémité supérieure de l'élément élastique (26) ; et
les évidements de prise auxiliaires (217) et les évidements de prise (216) possèdent un même rayon que et sont concentriques avec le centre du trou central (212).

4. Clapet anti-retour (20) selon la revendication 2, dans lequel l'écrou de presse-garniture (242) possède en outre
- un fond ;
- une surface externe ;
- une partie en saillie (243) faisant saillie depuis la surface externe près du fond de l'écrou de presse-garniture (242), la surface en dôme étant formée sur la partie en saillie (243) ; et
l'élément élastique (26) possède en outre une extrémité inférieure autour du coussinet de butée annulaire (25) et venant en butée contre l'écrou de presse-garniture (242).

5. Clapet anti-retour (20) selon la revendication 3, dans lequel
l'écrou de presse-garniture (242) possède en outre
- un fond ;
- une surface externe ;
- une partie en saillie (243) faisant saillie depuis la surface externe près du fond de l'écrou de presse-garniture (242), la surface en dôme étant formée sur la partie en saillie (243) ; et
l'élément élastique (26) possède en outre une extrémité inférieure autour du coussinet de butée annulaire (25) et venant en butée contre l'écrou de presse-garniture (242).

6. Clapet anti-retour (20) selon l'une quelconque des revendications 2 à 5, dans lequel
l'évidement (244) est rempli de colle afin de former une couche de colle (246) renfermant l'aimant (245) et la couche de colle (246) possède une surface supérieure ; et
l'élément élastique (26) possède en outre une extrémité inférieure autour du coussinet de butée annulaire (25) et venant en butée contre la surface supérieure de la couche de colle (246) de l'écrou de presse-garniture (242).

7. Clapet anti-retour (20) selon la revendication 6, dans lequel la surface supérieure de la couche de colle (246) affleure avec le sommet de l'écrou de presse-garniture (242).

8. Pompe comprenant
un corps (10) possédant un interrupteur magnétique ;
un refoulement (11) formé sur le corps (10) et possédant
- une surface interne ;
- une entrée (12) possédant un bossage annulaire (121) ; et
- une sortie (13) ; la pompe comprenant en outre :
un clapet anti-retour (20) monté dans le refoulement (11) de la pompe et possédant
- un support de guidage (21) fixé à la sortie (13) du refoulement (11) et possédant une base (211) possédant un trou central (212) défini de façon centrale à travers la base (211) ; et
- un joint d'étanchéité (22) monté sur le bossage annulaire (121) de l'entrée (12) du refoulement (11) ;
- un tourillon (24) monté dans le refoulement (11) et possédant
-- une tige (241) faisant saillie avec faculté de glissement dans le trou central (212) du support de guidage (21) et possédant une extrémité inférieure ; et
-- un écrou de presse-garniture (242) formé sur l'extrémité inférieure de la tige (241) et possédant au moins un aimant (245) ;
un élément élastique (26) monté autour de la tige (241) du tourillon (24) et entre le support de guidage (21) et l'écrou de presse-garniture (242) ; et
un coussinet de butée annulaire (25) monté autour de la tige (241) du tourillon (24) et sur l'écrou de presse-garniture (242).

9. Pompe selon la revendication 8, possédant en outre
une chemise (23) montée sur et venant en butée contre le joint d'étanchéité (22) et possédant :
- une base annulaire (231) montée sur et venant en butée contre le joint d'étanchéité (22) ; et
- de multiples feuilles élastiques (232) faisant saillie vers le haut depuis la base annulaire (231) et s'inclinant vers et venant en butée contre la surface interne du refoulement (11) afin de positionner le joint d'étanchéité (22) entre la chemise (23) et le bossage annulaire (121) de l'entrée (12) du refoulement (11) ; et dans laquelle
le support de guidage (21) possède en outre au moins deux protubérances de fixation (213) faisant saillie depuis la base (211) et chaque protubérance de fixation (213) possède une surface inférieure avec un évidement de prise (216) ;
l'écrou de presse-garniture (242) du tourillon (24) est effilé vers le bas afin de présenter une forme d'ogive et possède
- un sommet ;
- une surface en dôme sélectivement en contact avec le joint d'étanchéité (22) ;
- un évidement (244) défini dans le sommet de l'écrou de presse-garniture (242) ; et
le au moins un aimant (245) étant monté dans l'évidement (244) ; et
l'élément élastique (26) possède une extrémité supérieure venant en butée contre le support de guidage (21) et est monté dans les protubérances de fixation (213).

10. Pompe selon la revendication 9, dans laquelle le support de guidage (21) possède
deux protubérances de fixation (213) faisant saillie de façon opposée depuis la base (211) et chaque protubérance de fixation (213) possédant un trou de fixation (215) défini à travers les protubérances de fixation (213) ; et
deux protubérances de fixation auxiliaires (214) faisant saillie de façon opposée depuis la base (211), montées respectivement entre les protubérances de fixation (213) afin de former des intervalles multiples, permettant au support de guidage (21) de présenter une forme en croix et chaque protubérance de fixation auxiliaire (214) possédant une surface inférieure avec un évidement de prise auxiliaire (217) afin de recevoir l'extrémité supérieure de l'élément élastique (26) ; et
les évidements de prise auxiliaires (217) et les évidements de prise (216) ont un même rayon que et sont formés de façon concentrique avec un centre du trou central (212).

11. Pompe selon la revendication 9, dans laquelle l'écrou de presse-garniture (242) possède en outre
- un fond ;
- une surface externe ;
- une partie en saillie (243) faisant saillie depuis la surface externe près du fond de l'écrou de presse-garniture (242), la surface en dôme étant formée sur la partie en saillie (243) ; et
l'élément élastique (26) possède en outre une extrémité inférieure autour du coussinet de butée annulaire (25) et venant en butée contre l'écrou de presse-garniture (242).

12. Pompe selon la revendication 10, dans laquelle
l'écrou de presse-garniture (242) possède en outre
- un fond ;
- une surface externe ;
- une partie en saillie (243) faisant saillie depuis la surface externe près du fond de l'écrou de presse-garniture (242), la surface en dôme étant formée sur la partie en saillie (243) ; et
l'élément élastique (26) possède en outre une extrémité inférieure autour du coussinet de butée annulaire (25) et venant en butée contre l'écrou de presse-garniture (242).

13. Pompe selon l'une quelconque des revendications 9 à 12, dans laquelle
l'évidement (244) est rempli de colle afin de former une couche de colle (246) renfermant l'aimant (245) et la couche de colle (246) possède une surface supérieure ; et
l'élément élastique (26) possède en outre une extrémité inférieure autour du coussinet de butée annulaire (25) et venant en butée contre la surface supérieure de la couche de colle (246) de l'écrou de presse-garniture (242).

14. Pompe selon la revendication 13, dans laquelle la surface supérieure de la couche de colle (246) affleure avec le sommet de l'écrou de presse-garniture (242).
